# EUROPEAN PATENT APPLICATION

(11) **EP 4 691 977 A1**
(43) Date of publication of application: **11.02.2026**
(21) Application number: 23930092.4
(22) Date of filing: 14.12.2023
(51) Int. Cl.: C01B 32/205

(54) **LARGE GRAPHITIZATION FURNACE AND JOINT PRODUCTION METHOD**

(30) Priority: 31.03.2023 CN 202310330407
(71) Applicant: China Aluminum International Engineering Corporation Limited, Beijing 100093 (CN)
(72) Inventor: LIU, Chao, Shenyang, Liaoning 110001 (CN); LIU, Chaodong, Shenyang, Liaoning 110001 (CN); ZHOU, Shanhong, Shenyang, Liaoning 110001 (CN); XIA, Ziqi, Shenyang, Liaoning 110001 (CN); GUO, Naiyin, Shenyang, Liaoning 110001 (CN); LV, Bo, Shenyang, Liaoning 110001 (CN)
(74) Representative: P&TS SA (AG, Ltd.)
(86) International application number: PCT/CN2023/138645
(87) International publication number: WO 2024/198527

(57) **Abstract**

The present invention relates to a large-scale graphitization furnace and combined production method. It comprises a furnace body. Inside the furnace body, several material boxes are arranged side by side along the width direction, aligned end-to-end. Electrode walls are provided on both ends of each material box along the length direction. A material box and the corresponding electrode walls on both ends form a workstation. The electrode walls are conductive, and an insulating carbon brick is provided between adjacent electrode walls. A pre-graphitization material box is provided between adjacent material boxes. The material boxes are filled with a resistive material and a raw material to be graphitized. The pre-graphitization material box contains a raw material to be heated at a low temperature. The remaining space in the furnace body is filled with a thermal insulation material. By dividing the entire furnace body into several workstations, the present invention reduces heat accumulation and heat dissipation losses of the furnace body, enables the scale-up of the graphitization furnace, and reduces the construction footprint and initial investment costs compared to graphitization furnaces with equivalent production capacity. By providing a pre-graphitization material box between adjacent material boxes, waste heat from graphitization in the material boxes are re-used. With the production method where the workstations are energized sequentially from the center to both sides, the waste heat from the graphitization process is fully utilized, shortening the graphitization time and improving production efficiency.

## Description

### Technical Field

The present invention relates to the technical field of graphitization furnaces, particularly to a large-scale graphitization furnace and combined production method.

### Background Technology

Negative electrode material is a core component of new energy power batteries. With the national policies actively promoting the development of new energy vehicles, the demand for negative electrode materials continues to increase. The production of negative electrode materials primarily uses Acheson graphitization furnaces. The process involves energizing to cause the resistive material inside the furnace to generate heat, which raises the temperature of graphitizable carbon to 3000°C for graphitization modification, producing a graphitized negative electrode material. After reaching the set temperature, the power supply is stopped, and the graphitized negative electrode material in a high-temperature state naturally cools inside the Acheson graphitization furnace to the discharge temperature before being unloaded.

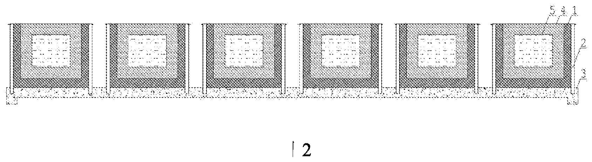

The Acheson graphitization furnace produces in a cyclic, intermittent mode. The entire cycle, including loading, production, cooling, and unloading, takes approximately 20-30 days. Typically, the natural cooling time of the furnace body and materials accounts for more than two-thirds of the total production cycle. Therefore, the effective productivity of a single Acheson graphitization furnace is not high. To meet the increasing production demand for negative electrode materials, larger-scale graphitization furnaces and more efficient production modes are needed to enhance the production speed of the negative electrode materials. In the prior art, one approach is to moderately increase the structural size of the graphitization furnace to boost the production capacity of a single graphitization furnace. However, designing excessively long or wide graphitization furnaces to pursue higher production speeds can lead to uneven heating inside the furnace, reducing product quality. Another approach involves arranging multiple graphitization furnaces on the same production line, as shown in Figure 2. However, due to the high-power of graphitization furnaces, conventional production conditions can only supply power to one or two graphitization furnaces at a time. Thus, the graphitization furnaces need to be energized sequentially. The firstenergized graphitization furnace begins to cool down naturally upon completion of the processing, and when the subsequently-energized furnace is in production, the firstenergized graphitization furnace can be unloaded once the cooling is completed, thereby accelerating the production rhythm. However, this production model still has two drawbacks. First, multiple graphitization furnaces occupy a large area, requiring large space and resulting in high initial investment costs. Moreover, the gaps between adjacent furnaces are not efficiently utilized. Second, the heat during the natural cooling process of the graphitization furnaces is wasted and cannot be efficiently reused.

### Summary of the Invention

In view of the above shortcomings and deficiencies of the prior art, the present invention provides a large-scale graphitization furnace and combined production method. By arranging several workstations side by side along the width direction inside the furnace body and providing a pre-graphitization material box between adjacent material boxes, the scale-up of the graphitization furnace is achieved. Meanwhile, the construction footprint and initial investment costs are reduced, and the product energy consumption is reduced while maintaining a tight production cadence.

A large-scale graphitization furnace comprises a furnace body. Inside the furnace body, several material boxes are arranged side by side along the width direction, aligned end-to-end. Electrode walls are provided on both ends of each material box along the length direction. A material box and the corresponding electrode walls on both ends form a workstation. The electrode walls are conductive, and an insulating carbon brick is provided between adjacent electrode walls. A pre-graphitization material box is provided between adjacent material boxes. The material boxes are filled with a resistive material and a raw material to be graphitized. The pre-graphitization material box contains a raw material to be heated at a low temperature. The remaining space in the furnace body is filled with a thermal insulation material.

By structurally eliminating the furnace wall on one side, and providing an insulating carbon brick between adjacent electrode walls, the entire furnace body is divided into several workstations, which reduces heat accumulation and heat dissipation losses of the furnace body, enables the scale-up of the graphitization furnace, and reduces the construction footprint and initial investment costs compared to graphitization furnaces with equivalent production capacity.

Inside the pre-graphitization material box is a raw material to be heated at a low temperature. The waste heat from graphitization may be utilized to remove volatile components from the graphitization raw material or produce low-temperature carbon products, such as carburant.

Further, the height and length of the pre-graphitization material boxes are smaller than those of the material boxes, and each of the pre-graphitization material boxes is located in the center of the gap between two adjacent material boxes. This ensures that the temperature of the thermal insulation material at the top, bottom, and both ends of the pre-graphitization material box is not affected by heat loss, meeting the required production temperature.

Further, the gap width between adjacent material boxes is "a," and the distance from the two sidewalls of the furnace body in the width direction to the nearest material box is "b," where a=2b. The width "a" is selected based on the current width "b." The waste heat utilization efficiency is the highest when a=2b. If "a" is too small, insufficient space would make it impossible to place the pre-graphitization material. Conversely, if "a" is too large, slower heat transfer and increased heat dissipation would result in lower temperature in the pre-graphitization zone and inadequate waste heat utilization.

Further, the outer wall of the furnace body is a steel structure, which ensures the strength of the outer wall of the furnace body.

Further, in the electrode wall, a furnace head electrode is provided. The furnace head electrodes on both sides of the furnace body are energized for graphitization production.

Further, the raw material to be heated at a low temperature in the pre-graphitization material box is a graphitization raw material from which volatile components are to be removed. The graphitization workstations are rapid heating zones, and raw materials with high volatile content can cause safety incidents such as furnace explosions. Therefore, raw materials with low volatile content are preferred for production. The pre-graphitization material boxes are located between adjacent material boxes, where heating is relatively slow, allowing the utilization of waste heat from graphitization to reduce volatile content. The resulting products are later used for graphitization, facilitating rapid heating during the graphitization process, ultimately reducing graphitization production time and energy consumption.

A combined production method of a large-scale graphitization furnace comprises the following steps:
S01: Energizing the central workstation to perform graphitization in the material box;
S02: De-energizing, after graphitization is completed in the material box of the central workstation;
S03: While de-energizing in the previous step, energizing the workstations on both sides of the workstation where graphitization is completed, to perform graphitization in the material boxes of the workstations on both sides;
S04: De-energizing, after graphitization is completed in the workstations on both sides; and
Repeating S03 and S04 until graphitization is completed in all workstations.

With the production method where the workstations are energized sequentially from the center to both sides, the waste heat from the graphitization process is fully utilized, shortening the graphitization time and improving production efficiency.

Further, if the number of workstations is odd, there is one central workstation; if the number is even, two workstations are energized.

Further, the method further comprises step S05: after the cooling of the material boxes and pre-graphitization material boxes is completed, unloading sequentially from the central workstation to the workstations on both sides.

The beneficial effects of the present invention are:
The large-scale graphitization furnace according to the present invention structurally eliminates the furnace wall on one side and is provided with an insulating carbon brick between adjacent electrode walls, whereby the entire furnace body is divided into several workstations. This reduces heat accumulation and heat dissipation losses of the furnace body, enables the scale-up of the graphitization furnace, and reduces the construction footprint and initial investment costs compared to graphitization furnaces with equivalent production capacity.

By providing a pre-graphitization material box between adjacent material boxes, waste heat from graphitization in the material boxes are fully utilized, and the volatile content of the raw material in the pre-graphitization material box is reduced. The resulting products are later used for graphitization, facilitating rapid heating during the graphitization process, ultimately reducing the graphitization production time and energy consumption.

With the combined production method where the workstations are energized sequentially from the center to both sides, the waste heat from the graphitization process is fully utilized, shortening the graphitization time and improving production efficiency.

### Brief Description of the Drawings

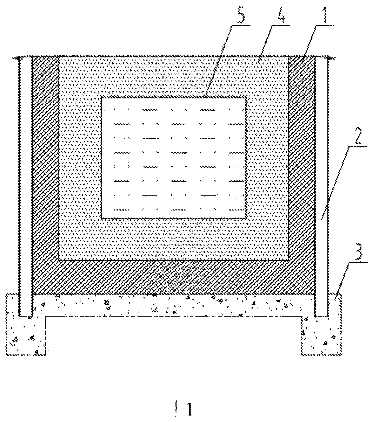

Figure 1 is a schematic structural diagram of a single graphitization furnace in the width direction in the prior art.
Figure 2 is a side view of multiple graphitization furnaces arranged in the prior art.

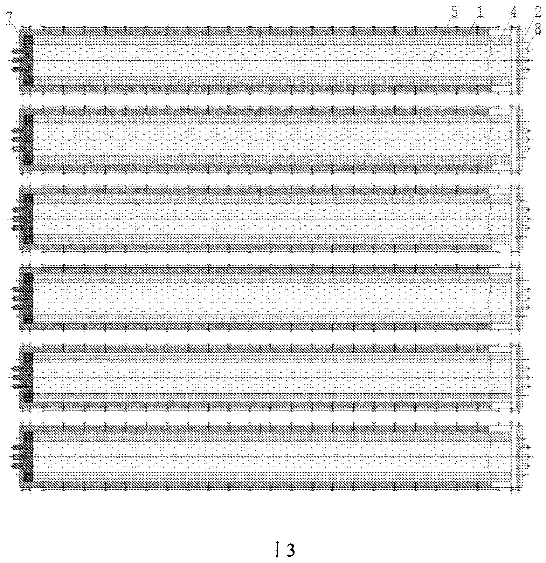

Figure 3 is a top view of multiple graphitization furnaces arranged in the prior art.

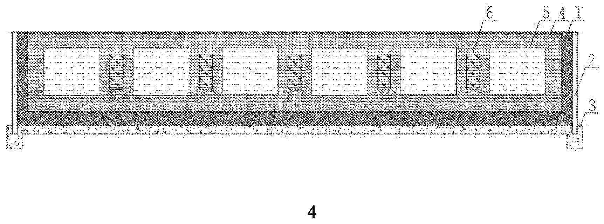

Figure 4 is a side view of a large-scale graphitization furnace of the present invention.

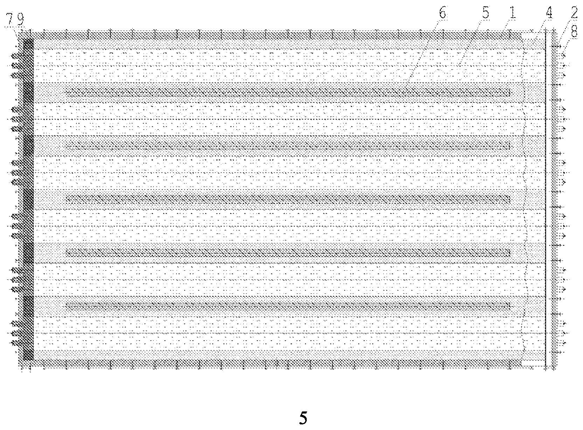

Figure 5 is a top view of a large-scale graphitization furnace of the present invention.

In the figures: 1. Furnace body; 2. Steel structure; 3. Concrete foundation; 4. Thermal insulation material; 5. Material box; 6. Pre-graphitization material box; 7. Electrode wall; 8. Furnace head electrode; 9. Insulating carbon brick.

### Detailed Description

To better explain the present invention to facilitate understanding, the invention will be described in detail below through specific embodiments with reference to the accompanying drawings.

A large-scale graphitization furnace comprises a furnace body 1. Inside the furnace body 1, several material boxes 5 are arranged side by side along the width direction, aligned end-to-end. Electrode walls 7 are provided on both ends of each material box 5 along the length direction. A material box 5 and the corresponding electrode walls 7 on both ends form a workstation. The electrode walls 7 are conductive, and an insulating carbon brick 9 is provided between adjacent electrode walls 7. A pre-graphitization material box 6 is provided between adjacent material boxes 5. The material boxes 5 are filled with a resistive material and a raw material to be graphitized. The pre-graphitization material box 6 contains a raw material to be heated at a low temperature. The remaining space in the furnace body 1 is filled with a thermal insulation material 4, forming a multi-workstation combined graphitization furnace.

By structurally eliminating the furnace wall on one side, and providing an insulating carbon brick 9 between adjacent electrode walls 7, the entire furnace body 1 is divided into several workstations, which reduces heat accumulation and heat dissipation losses of the furnace body 1, enables the scale-up of the graphitization furnace, and reduces the construction footprint and initial investment costs compared to graphitization furnaces with equivalent production capacity.

Inside the pre-graphitization material box 6 is a raw material to be heated at a low temperature. The waste heat from graphitization may be utilized to remove volatile components from the graphitization raw material or produce low-temperature carbon products, such as carburant.

Specifically, the height and length of the pre-graphitization material boxes 6 are smaller than those of the material boxes 5, and each of the pre-graphitization material boxes 6 is located in the center of the gap between two adjacent material boxes 5. This ensures that the temperature of the thermal insulation material 4 at the top, bottom, and both ends of the pre-graphitization material box 6 is not affected by heat loss, meeting the required production temperature.

Specifically, the gap width between adjacent material boxes 5 is "a," and the distance from the two sidewalls of the furnace body 1 in the width direction to the nearest material box 5 is "b," where a = 2b. The width "a" is selected based on the current width "b". The waste heat utilization efficiency is the highest when a=2b. If "a" is too small, insufficient space would make it impossible to place the pre-graphitization material. Conversely, if "a" is too large, slower heat transfer and increased heat dissipation would result in lower temperature in the pre-graphitization zone and inadequate waste heat utilization.

Specifically, the outer wall of the furnace body 1 is a steel structure 2, which ensures the strength of the outer wall of the furnace body 1. The bottom of the furnace body 1 is a concrete foundation 3.

Specifically, in the electrode wall 7, a furnace head electrode 8 is provided. The furnace head electrodes 8 on both sides of the furnace body 1 are energized for graphitization production.

Specifically, the raw material to be heated at a low temperature in the pre-graphitization material box 6 is a graphitization raw material from which volatile components are to be removed. The graphitization workstations are rapid heating zones, and raw materials with high volatile content can cause safety incidents such as furnace explosions. Therefore, raw materials with low volatile content are preferred for production. The pre-graphitization material boxes 6 are located between adjacent material boxes 5, where heating is relatively slow, allowing the utilization of waste heat from graphitization to reduce volatile content. The resulting products are later used for graphitization, facilitating rapid heating during the graphitization process, ultimately reducing the graphitization production time and energy consumption.

A combined production method of a large-scale graphitization furnace comprises the following steps:
S01: Energizing the central workstation to perform graphitization in the material box 5;
S02: De-energizing, after graphitization is completed in the material box 5 of the central workstation;
S03: While de-energizing in the previous step, energizing the workstations on both sides of the workstation where graphitization is completed, to perform graphitization in the material boxes 5 of the workstations on both sides;
S04: De-energizing, after graphitization is completed in the workstations on both sides; and
Repeating S03 and S04 until graphitization is completed in all workstations.

After the above-mentioned workstations are de-energized, they enter the natural cooling state. The natural cooling occurs simultaneously with the energization and heating of subsequent workstations.

With the combined production method where the workstations are energized sequentially from the center to both sides, the waste heat from the graphitization process is fully utilized, shortening the graphitization time and improving production efficiency.

Specifically, if the number of workstations is odd, there is one central workstation; if the number is even, two workstations are energized.

Specifically, the method further comprises step S05: after the cooling of the material boxes 5 and pre-graphitization material boxes 6 is completed, unloading sequentially from the central workstation to the workstations on both sides.

Although the embodiments of the present invention have been shown and described above, it is understood that these embodiments are illustrative and should not be construed as limitations on the present invention. Those skilled in the art can make modifications, changes, substitutions, and adaptations of the above embodiments within the scope of the present invention.

## Claims

1. A large-scale graphitization furnace comprising a furnace body (1), **characterized in that**: inside the furnace body (1), several material boxes (5) are arranged side by side along the width direction, aligned end-to-end; electrode walls (7) are provided on both ends of each material box (5) along the length direction; a material box (5) and the corresponding electrode walls (7) on both ends form a workstation; the electrode walls (7) are conductive, and an insulating carbon brick (9) is provided between adjacent electrode walls (7); a pre-graphitization material box (6) is provided between adjacent material boxes (5); the material boxes (5) are filled with a resistive material and a raw material to be graphitized; the pre-graphitization material box (6) contains a raw material to be heated at a low temperature; the remaining space in the furnace body (1) is filled with a thermal insulation material (4), forming a multi-workstation combined graphitization furnace.

2. The large-scale graphitization furnace according to claim 1, **characterized in that**: a height and a length of the pre-graphitization material boxes (6) are smaller than those of the material boxes (5), and each of the pre-graphitization material boxes (6) is located in the center of a gap between two adjacent material boxes (5).

3. The large-scale graphitization furnace according to claim 1, **characterized in that**: a gap width between adjacent material boxes (5) is "a," and a distance from the two sidewalls of the furnace body (1) in the width direction to the nearest material box (5) is "b," where a = 2b.

4. The large-scale graphitization furnace according to claim 1, **characterized in that**: an outer wall of the furnace body (1) is a steel structure (2).

5. The large-scale graphitization furnace according to claim 1, **characterized in that**: in the electrode wall (7), a furnace head electrode (8) is provided; the furnace head electrodes (8) on both sides of the furnace body (1) are energized for graphitization production.

6. The large-scale graphitization furnace according to claim 1, **characterized in that**: the raw material to be heated at a low temperature in the pre-graphitization material box (6) is a graphitization raw material from which volatile components are to be removed.

7. A combined production method using the large-scale graphitization furnace according to one of claims 1 to 6, **characterized in** comprising the following steps:
S01: Energizing a central workstation to perform graphitization in the material box (5);
S02: De-energizing, after graphitization is completed in the material box (5) of the central workstation;
S03: While de-energizing in the previous step, energizing the workstations on both sides of the workstation where graphitization is completed, to perform graphitization in the material boxes (5) of the workstations on both sides;
S04: De-energizing, after graphitization is completed in the workstations on both sides; and
Repeating S03 and S04 until graphitization is completed in all workstations.

8. The combined production method of a large-scale graphitization furnace according to 7, **characterized in that**: if the number of workstations is odd, there is one central workstation; if the number is even, two workstations are energized.

9. The combined production method of a large-scale graphitization furnace according to 7, **characterized in that**: the method further comprises step S05: after the cooling of the material boxes (5) and pre-graphitization material boxes (6) is completed, unloading sequentially from the central workstation to the workstations on both sides.
